Europäisches Patentamt

European Patent Office

Office européen des brevets

(19)

(11) **EP 0 627 833 B1**

(12) **EUROPÄISCHE PATENTSCHRIFT**

(45) Veröffentlichungstag und Bekanntmachung des Hinweises auf die Patenterteilung:
**30.06.2004 Patentblatt 2004/27**

(51) Int Cl.[7]: **H04L 27/22**, H04H 1/00

(21) Anmeldenummer: **94105949.5**

(22) Anmeldetag: **18.04.1994**

(54) **Demodulationsverfahren und Demodulator für Radio-Daten-Signale**

Demodulation method and demodulator for RDS signals

Procédé de démodulation et démodulateur pour signaux "RDS"

(84) Benannte Vertragsstaaten:
**AT DE ES FR GB IT PT**

(30) Priorität: **04.06.1993 DE 4318643**

(43) Veröffentlichungstag der Anmeldung:
**07.12.1994 Patentblatt 1994/49**

(73) Patentinhaber: **ROBERT BOSCH GMBH**
**70442 Stuttgart (DE)**

(72) Erfinder: **Hegeler, Wilhelm**
**D-31134 Hildesheim (DE)**

(56) Entgegenhaltungen:
**EP-A- 0 195 989** **DE-A- 4 029 583**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung geht aus von einem Demodulationsverfahren für Radio-Daten-Signale und einem Demodulator zur Durchfuhrung des Verfahrens.

Mit dem bekannten Radio-Daten-System können zusätzlich zu den Audiosignalen Datensignale übertragen werden, die beispielsweise den Namen des ausgestrahlten Programms oder andere Information enthalten. Um beim UKW-Stero-Hörrundfunk die Kompatibilität mit den Audiosignalen sowie mit Verkehrsfunksignalen sicherzustellen, wird bei dem Radio-Daten-System der auch beim Verkehrsfunk verwendete Träger von 57 kHz mit den zu übertragenden Daten moduliert, wobei allerdings die Seitenbänder außerhalb der für verschiedene Signale des Verkehrsfunks benutzten Modulationsfrequenzen liegen. Es wird dabei eine Biphase-Codierung gewählt, die bewirkt, daß sich keine Spektralanteile bei 57 kHz ergeben und der Takt implizit mitübertragen wird. Das gesamte Spektrum des modulierten Radio-Daten-Signals, im folgenden auch RDS-Signal genannt, wird auf ±2,4 kHz begrenzt.

Bei der zur Demodulation erforderlichen Regenerierung des Hilfsträgers sowie bei der Erkennung der Phasensprünge sollen Störungen des Radio-Daten-Signals möglichst nicht zu einem Fehler in der Demodulation führen. Dieses ist besonders schwierig, wenn außer dem Radio-Daten-Signal noch Verkehrsfunksignale übertragen werden.

Dazu werden häufig Mittel der digitalen Signalverarbeitung angewandt, entweder in Form von speziellen Schaltungen oder in Form von programmierbaren Signalprozessoren. In beiden Fällen müssen relativ große Datenmengen in relativ kurzen Zeiten verarbeitet werden.

Aufgabe der vorliegenden Erfindung ist es, ein Demodulationsverfahren und einen Demodulator für Radio-Daten-Signale vorzuschlagen, bei dem das hilfsträgerfrequente Signal in vorteilhafter Weise für eine anschließende weitere digitale Signalverarbeitung vorbereitet wird.

Diese Aufgabe wird bei dem erfindungsgemäßen Demodulationsverfahren dadurch gelöst, daß das amplitudenbegrenzte trägerfrequente Signal mit einer Abtastfrequenz abgetastet wird, die ein Vielfaches der Frequenz des Hilfsträgers ist, daß die Abtastwerte über einen vorgegebenen Teil jeweils einer Periode des Hilfsträgers aufsummiert werden und daß die aufsummierten Abtastwerte einer digitalen Signalverarbeitungsschaltung zugeführt werden.

Vorzugsweise ist bei einem erfindungsgemäßen Demodulator vorgesehen, daß die digitale Signalverarbeitungsschaltung eingangsseitig einen digitalen Bandpaß mit einer Mittenfrequenz aufweist, welche der Frequenz des Hilfsträgers entspricht und/oder daß der vorgegebene Teil ein Viertel ist.

Eine vorteilhafte Ausführungsform des erfindungsgemäßen Demodulators besteht darin, daß die digitale Signalverarbeitungsschaltung ferner eine Schaltung zur Integration des Ausgangssignals des digitalen Bandpasses über jeweils eine Halbwelle des Bittaktsignals, Schaltungen zur Berechnung der Differenzen zweier aufeinanderfolgender Integrale und der Summe der Differenzen enthält und daß aus der Summe der Differenzen das demodulierte Ausgangssignal und ein Schaltphasenkorrektursignal erzeugt werden. Diese Ausführungsform zeichnet sich durch eine besonders günstige weitere Signalverarbeitung aus, insbesondere zur Korrektur des 180°-Fehlers bei der Rückgewinnung des Bittaktes.

Eine Weiterbildung dieser Ausführungsform besteht darin, daß ferner aus den Differenzen zweier aufeinanderfolgender Integrale eine Differenz gebildet wird und daß aus der Differenz der Differenzen ein Qualitätssignal gebildet wird.

Bei einer anderen Weiterbildung dieser Ausführungsform kann auch vorgesehen sein, daß der digitale Bandpaß zwei orthogonale Ausgangssignale erzeugt, deren höchstwertige Bits einer Schaltung zur Erkennung des Vorhandenseins von Verkehrsfunksignalen und einer Phasenregelschaltung zur Erzeugung eines regenerierten Hilfsträgers zuführbar sind.

Eine weitere vorteilhafte Ausführungsform der erfindungsgemäßen Schaltungsanordnung besteht darin, daß aus den höchstwertigen Bits der Summe der Differenzen und der Differenz der Differenzen Signale zur Regelung der Phase eines regenerierten Radio-Daten-Takt-Signals erzeugt werden.

Eine andere Weiterbildung besteht darin, daß zum Aufsummieren der Abtastwerte zwei Aufwärts/Abwärts-Zähler vorgesehen sind, die mit dem Vielfachen der Frequenz des Hilfsträgers getaktet werden, wobei die Abtastwerte jeweils für die Dauer einer viertel Periode des Hilfsträgers abwechselnd einem Steuereingang eines der Aufwärts/Abwärts-Zähler zuführbar sind und daß die Aufwärts/Abwärts-Zähler für jeweils eine halbe Periode des Hilfsträgers aufwärts und für eine weitere halbe Periode des Hilfsträgers abwärts zählen und daß jeweils am Ende einer Periode der Zählerstand in eine Schaltung zur Signalverarbeitung übertragen wird. Dabei kann die Schaltung zur Signalverarbeitung ein Mikroprozessor sein, in welchem ein Programm zur weiteren Auswertung der zugeführten Signale ausführbar ist.

Der Vorteil dieser Weiterbildung besteht darin, daß zur Verarbeitung durch den Mikroprozessor eine geringe Datenmenge anfällt, da die ohnehin fällige Mischung mit 57 kHz in den dem Mikroprozessor zu übergebenden Daten bereits erfolgt ist.

Bei einer vorteilhaften Ausführungform dieser Weiterbildung kann eine Bandpaß-Filterung der aufsummierten Abtastwerte in besonders einfacher Weise dadurch vorgenommen werden, daß nach dem Übertragen des Zählerstandes der jeweilige Aufwärts/Abwärts-Zähler auf einen vorgegebenen Bruchteil, vorzugsweise die Hälfte des übertragenen Zählerstandes, gesetzt wird.

Ausführungsbeispiele der Erfindung sind in der Zeichnung anhand mehrerer Figuren dargestellt und in der nachfolgenden Beschreibung näher erläutert. Es zeigt:

Fig. 1    ein Blockschaltbild eines erfindungsgemäßen Demodulators,

Fig. 2    eine Schaltungsanordnung zum Integrieren und Auslesen und einen digitalen Bandpaß

Fig. 3    einen Detektor für Verkehrsfunkinformationen und eine Schaltungsanordnung zur Phasenkorrektur,

Fig. 4    eine Schaltungsanordnung zur Integration von Halbwellen sowie zur weiteren Verarbeitung des Ergebnisses der Integration,

Fig. 5    eine Schaltungsanordnung zur Ableitung des Radio-Daten-Signals und eines Qualitätssignals,

Fig. 6    Zeitdiagramme von bei den vorgenannten Schaltungsanordnungen benötigten Taktsignalen,

Fig. 7    eine Schaltungsanordnung zur Takterzeugung,

Fig. 8    ein Blockschaltbild eines weiteren erfindungsgemäßen Demodulators und

Fig. 9    ein Blockschaltbild einer Schaltungsanordnung zum Integrieren und Auslesen.

Gleiche Teile sind in den Figuren mit gleichen Bezugszeichen versehen. Das mit ADD gekennzeichnete Symbol stellt einen seriellen Addierer dar, bestehend aus einem Volladdierer mit drei Eingängen A, B und CI (= Carry-in) und zwei Ausgängen S und CO (=Carry-out). Am Ausgang S tritt eine 1 auf, wenn A+B+CI ungerade ist. Am Ausgang CO tritt eine 1 auf, wenn A+B+CI > 1 ist. Ein weiterer Bestandteil des Addierers ist ein D-Flip-Flop, dessen Dateneingang D mit CO und dessen Ausgang Q mit CI verbunden sind. Als Takt wird dem D-Flip-Flop der gleiche Takt wie einem mit dem jeweiligen Addiererausgang verbundenen Schieberegister zugeführt. Vor einer Addition kann das Flip-Flop über Set oder Reset vorgesetzt werden, was in den Figuren mit c0 = ... gekennzeichnet ist.

Ferner sind in den Figuren Flip-Flops durch ihren Dateneingang D und mindestens einen Ausgang Q gekennzeichnet, während für die Darstellung von Schieberegistern SR, für Zähler CNT und für Integratoren INT verwendet wurden.

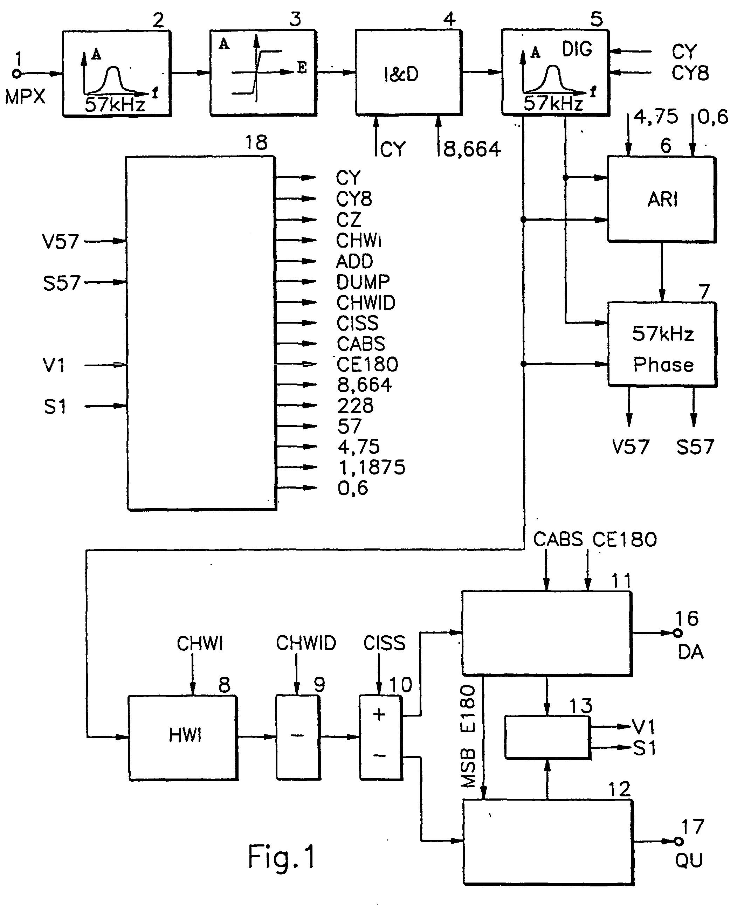

Dem in Fig. 1 dargestellten Ausführungsbeispiel eines erfindungsgemäßen RDS-Demodulators wird bei 1 ein empfangenes Multiplexsignal MPX zugeführt, das außer den Radio-Daten-Signalen noch ein Verkehrsfunksignal enthalten kann. Nach einer Filterung in einem 57-kHz-Bandpaß 2 wird die Amplitude des Multiplexsignals bei 3 begrenzt. Das entstandene binäre Signal steuert eine Schaltung 4 zum Integrieren und Auslesen (Integrate and dump) an, deren Ausgangssignal über einen digitalen Bandpaß 5 geleitet wird. Dieser hat zwei Ausgänge für die beiden orthogonalen Komponenten YC und YS des gefilterten 57-kHz-Signals Y.

Beide Komponenten werden einer Schaltung 6 zur Erkennung, ob Verkehrsfunksignale vorliegen, und einer Schaltung 7 zur Phasenkorrektur des 57-kHz-Signals zugeführt. Eine der Komponenten wird einer Schaltung zur Halbwellenintegration zugeleitet, von derem Ausgangssignal jeweils zwei um eine viertel Bittaktperiode, das heißt um 1/4,75 kHz, zeitversetzte Werte bei 9 subtrahiert werden. Aus diesen Werten HWID werden bei 10 die Summe ISS und die Differenz ISD gebildet.

Die Summe ISS dient in der Schaltung 11 dazu, das demodulierte Radio-Daten-Signal DA und ein Korrektursignal zu erzeugen, das einen 180°-Phasenfehler korrigiert. Die Differenz ISD wird einer Schaltung 12 zur Ableitung eines die Qualität bezeichnenden Signals zugeführt. In beiden Schaltungen 11 und 12 wird unter anderem das höchstwertige Bit MSB des Signals ISS bzw. ISD abgetrennt und einer Schaltung 13 zur Phasenregelung zugeleitet. In dieser Schaltung werden zwei Signale V1 und S1 erzeugt, wobei V1 eine Variation der Phase des 1,1875-kHz-Signals und S1 das Vorzeichen der Variation bedeuten. Das höchstwertige Bit der Summe ISS wird über eine Schaltung 14 zur Phasenauswahl geleitet, die von dem Korrektursignal gesteuert wird. Am Ausgang 16 steht das Radio-Daten-Signal DA zur Verfügung, während ein Qualitätssignal QU einem Ausgang 17 entnehmbar ist.

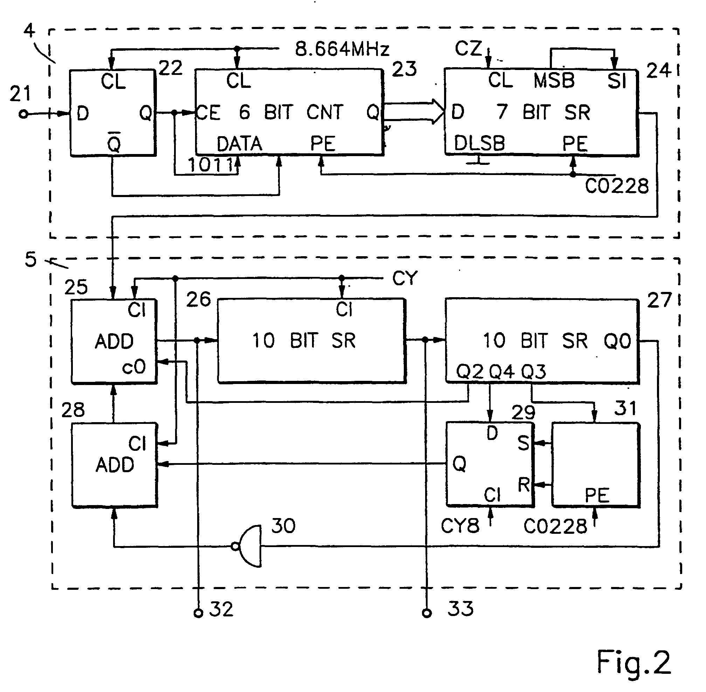

Ein Taktsignalgenerator 18 erzeugt für die einzelnen Schaltungen Taktsignale, die im Zusammenhang mit den Figuren 2 bis 7 näher erläutert werden. Von den Schaltungen 7 und 13 erzeugte Signale V57, S57, V1 und S1 steuern in dem Taktsignalgenerator 18 enthaltene Frequenzteiler.

Fig. 2 zeigt die Schaltungsanordnung 4 zum Integrieren und Auslesen und den digitalen Bandpaß 5 in gegenüber Fig. 1 detaillierterer Darstellung. Das binäre Signal wird einem Eingang 21 eines D-Flip-Flops 22 zugeführt, das mit einem Taktsignal der Frequenz 8,664 MHz getaktet wird. Ein Ausgang Q des D-Flip-Flops 22 ist mit einem Count-enable-Eingang CE eines 6-Bit-Zählers 23 verbunden, der ebenfalls mit der Frequenz von 8,664 MHz getaktet wird. Im Takt eines Taktsignals CZ mit der Frequenz von 228 kHz wird der Inhalt des Zählers 23 in ein 7-Bit-Schieberegister 24 übernommen. Dabei wird ein Taktimpuls unterdrückt bzw. ist unwirksam, während der 6-Bit-Zähler 23 neu auf ix-19 gesetzt wird. Dabei ist ix der zur Zeit des fehlenden Taktimpulses gültige Wert des binären Signals (0 oder 1). Der vom Schieberegister 24 übernommene Inhalt des 6-Bit-Zählers 23 wird um ein weiteres Bit ergänzt - nämlich das geringswertige Bit -, das beim Laden auf 0 gesetzt wird. Dieses ermöglicht die Verwendung eines gemeinsamen Taktsignals für dieses und die folgenden Schieberegister. Der serielle Dateneingang SI des Schieberegisters 24 ist mit dem MSB-Ausgang verbunden, so daß ein arithmetisches Shift-Right mit 10 Bit möglich ist.

Der digitale Bandpaß 5 wird von einem rekursiven Filter zweiter Ordnung gebildet mit der Funktion Y(n) = 2•X - 7/8 • Y(n-2) bei einer Taktfrequenz von 228 kHz. Dieses Filter hat eine Verstärkung von 16 bei 57 kHz. Das Eingangssignal des Filters wird mit 2 multipliziert, weil die letzten drei Bit im Filter wegen der Rundungsfehler für die Auswertung entfallen. Das Filter besteht aus einem Addierer 25, zwei als Verzögerungsschaltungen dienende Schieberegister 26, 27, einem weiteren Addierer 28, einem 1-Bit-Speicher 29 und einem Invertierer 30.

Der 1-Bit-Speicher 29 wird mit dem viertniedrigsten Bit vorgesetzt. An seinem Dateneingang liegt das fünftniedrigste Bit. Es folgen sechs Taktimpulse, so daß das höchstwertigste Bit im 1-Bit-Speicher 29 stehenbleibt. Der bei der Komplementbildung entstehende "Fehler" von -1 wird absichtlich nicht korrigiert, weil dadurch das Problem des Vorzeichens bei Werten Y=0 entfällt. Y=0 hat funktionell die Wertigkeit +0,5, während Y=-1 -0,5 entspricht. Damit fällt die funktionelle 0 exakt zusammen mit dem Sprung des höchstwertigen Bits, was für die 57-kHz-Phasenregelung vorteilhaft ist.

In den beiden Schieberegistern 26, 27 des Bandpasses 5 stehen nach Phasenregelung Mittelwerte der beiden orthogonalen Komponenten des 57-kHz-Signals an. Im 57-kHz-Takt gelesen können sie eindeutig den Radio-Daten-Signalen und gegebenenfalls den Verkehrsfunksignalen zugeordnet werden. Das höchstwertige Bit (Vorzeichen) beider Größen dient zur Phasenregelung und zur Verkehrsfunkerkennung. Aus der das Radio-Daten-Signal enthaltenen Komponente des 57-kHz-Signals wird eine 5-Bit-Zahl zur Radio-Daten-Demodulation verwendet.

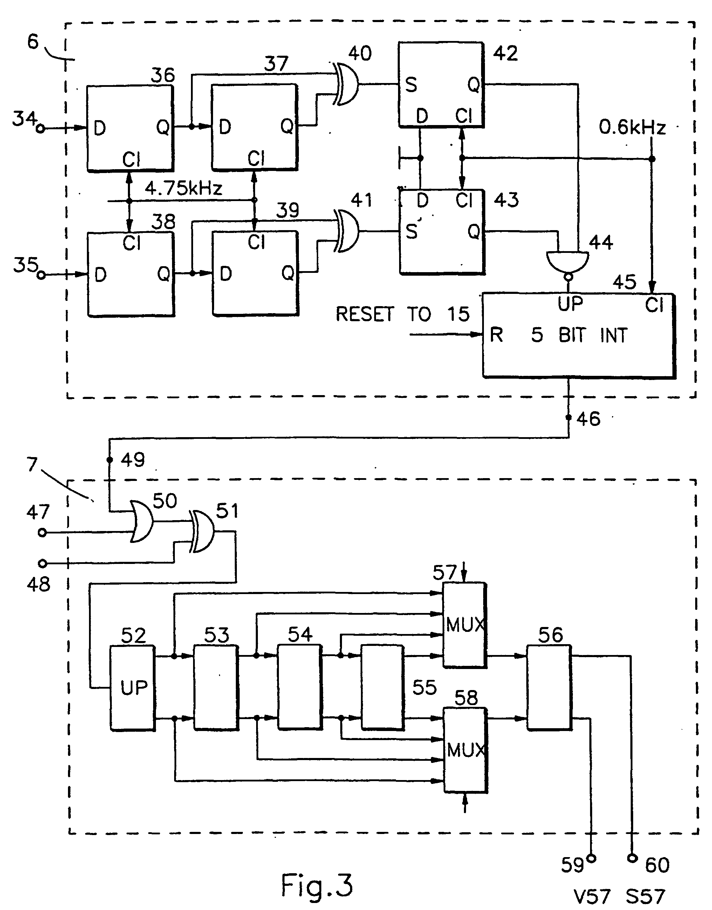

Der Schaltung 6 (Fig. 3) zur Erkennung von Verkehrsfunksignalen werden die beiden Komponenten des 57-kHz-Signals bei 34, 35 zugeführt. Sie werden über jeweils zwei D-Flip-Flops 36, 37; 38, 39 weitergeleitet, die mit einem 4,75-kHz-Signal getaktet werden. Die Eingangs- und Ausgangssignale der D-Flip-Flops 37, 39 werden jeweils einer Exklusiv-Oder-Schaltung 40, 41 zugeführt, welche bei einem Vorzeichenwechsel jeweils einen Impuls abgeben. Flip-Flops 42, 43 werden von diesen Impulsen gesetzt und von einem Taktsignal mit einer Frequenz von etwa 0,6 kHz rückgesetzt. Dadurch und durch die anschließende Nicht-Und-Schaltung 44 wird erkannt, wenn in zwei 1,1875-kHz-Perioden in mindestens einer der Komponenten kein Vorzeichenwechsel stattgefunden hat. In diesem Fall gilt die Anwesenheit von Verkehrsfunksignalen als wahrscheinlich. Deshalb wird ein anschließender 5-Bit-Integrator 45 inkrementiert und im anderen Fall dekrementiert. Der Integrator ist mit einer beidseitigen Überlaufsperre versehen. Die Größe der Inkremente und Dekremente hängt von der Zählrichtung und vom zweithöchsten Bit des Integrators 45 gemäß folgender Tabelle ab:

| Zählerstand | 0...7 | 8...15 | 16...23 | 24...31 |
|---|---|---|---|---|
| ja | +1 | +2 | +1 | +2 |
| nein | -2 | -1 | -2 | -1 |

Bei statistisch wechselnder Ja/Nein-Information hat der Integrator drei stabile Lagen, nämlich die Mitte und beide Endlagen, aus denen er nur bei deutlichem Überwiegen einer Information herauskommen kann. Diese Hysterese bewirkt eine schnelle Entscheidung bei gutem Signal und eine große Trägheit bei Störungen. Das höchstwertige Bit des Integrator-Inhalts stellt das Ausgangssignal dar und bedeutet, ob die Anwesenheit von Verkehrsfunksignalen erkannt wurde oder nicht. Es ist von einem Ausgang 46 abnehmbar.

Der ebenfalls in Fig. 3 dargestellten Schaltungsanordnung zur 57-kHz-Phasenkorrektur werden von dem digitalen Bandpaß 5 die höchstwertigen Bit beider Komponenten des 57-kHz-Signals und das Ausgangssignal der Schaltung 6 über Eingänge 47, 48, 49 zugeleitet. Nach Verknüpfung mit Hilfe einer Oder-Schaltung 50 und einer Exklusiv-Oder-Schaltung 51 steuern die Signale über einen Eingang UP einen 5-Bit-Zähler aus 1-Bit-Zählern 52 bis 56, die durch Über- und Unterlauf-Ausgänge miteinander verbunden sind. Nach jeweils einem Über- bzw. Unterlauf des gesamten Zählers wird der 5-Bit-Zähler auf die Mitte seines Zählbereichs gesetzt. Die Größe der Inkremente bzw. des Zählbereichs können Variable sein, um am Anfang eine schnelle Regelung und in einem stationären Betrieb eine größere Trägheit zu bewirken. Dazu können mit Multiplexern 57, 58 einzelne 1-Bit-Zähler unwirksam geschaltet werden. Über die mit Pfeilen angedeuteten Eingänge der Multiplexer 57, 58 werden geeignete Umschaltsignale zugeführt.

Nimmt das bei 49 zugeführte Signal ARI den Wert 1 an, wird nur eine Komponente zur Steuerung benutzt, die dabei automatisch zur RDS-Komponente wird, da die Phasenregelschleife die Phase so dreht, daß hier im Mittel 0 steht. Das entspricht einem Nulldurchgang des Trägersignals.

Im Falle ARI=0 wird die Exklusiv-Oder-Verknüpfung beider bei 47 und 48 zugeführter Komponenten zur Phasenregelung im Sinne einer Costas-loop benutzt. Durch geeignete Invertierung ist sichergestellt, daß die gleiche Komponente zur RDS-Komponente wird, wie im Falle ARI=1.

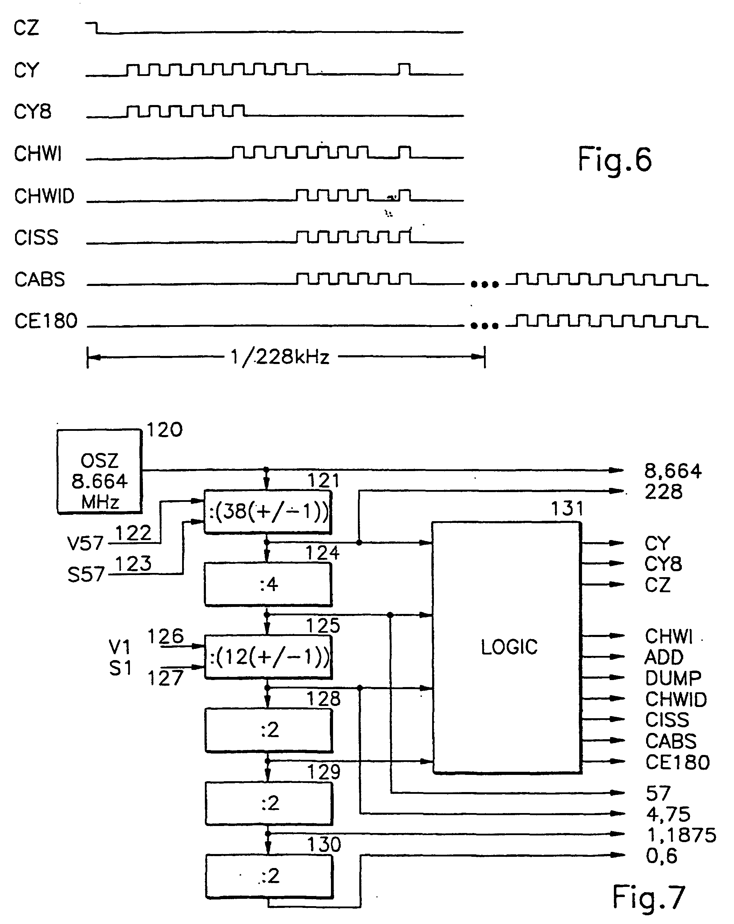

An Ausgängen 59, 60 der Schaltung 7 stehen dann Signale V57 und S57 zur Steuerung der Phasenlage des 57-kHz-Trägers zur Verfügung. Dabei bewirkt das Signal V57 im Falle des Wertes 1 eine Variation der Phase und tritt kurzzeitig bei einem Über- oder Unterlauf des Zählers 56 auf. Das Signal S57 stellt das Vorzeichen, das heißt die Richtung der Variation, dar und besteht aus dem jeweiligen Inhalt des Zählers 56. Die Signale V57 und S57 bewirken im 228-kHz-Generator (Fig. 7), daß die Taktfrequenz von 8,664 MHz einmal durch 37 bzw. 39 anstatt wie gewöhnlich durch 38 geteilt wird.

Für eine gute 1,1875-kHz-Phasenregelung und RDS-Demodulation wird unter anderem eine annähernd sinusförmige Bewertung der 57-kHz-RDS-Abtastwerte benötigt - und zwar für zwei verschiedene Phasen gleichzeitig. Es ist daher bei dem erfindungsgemäßen Demodulator vorgesehen, zunächst zwei um 90° versetzte Halbwellen-Integrale zu bilden, um daraus die gewünschten Funktionen zusammenzusetzen.

Da eine unterschiedliche und genügend fein gestufte Bewertung der 57-kHz-Abtastwerte eine Multiplikation erfordern würde, wird die Bewertung bei dem erfindungsgemäßen Demodulator durch unterschiedliche zeitliche Dichte der zur Integration verwendeten Abtastwerte erreicht. Dieses ist zulässig, weil die Werte sich im 57-kHz-Bandpaß in wenigen 57-kHz-Perioden nur wenig ändern. Als höchste Abtastfrequenz (größte Dichte der Abtastwerte) wurde 57 kHz gewählt. Dadurch wird gegenüber einer Frequenz von 114 kHz, die auch möglich wäre, mindestens ein Bit in den für diese Operation erforderlichen Schaltungen erspart.

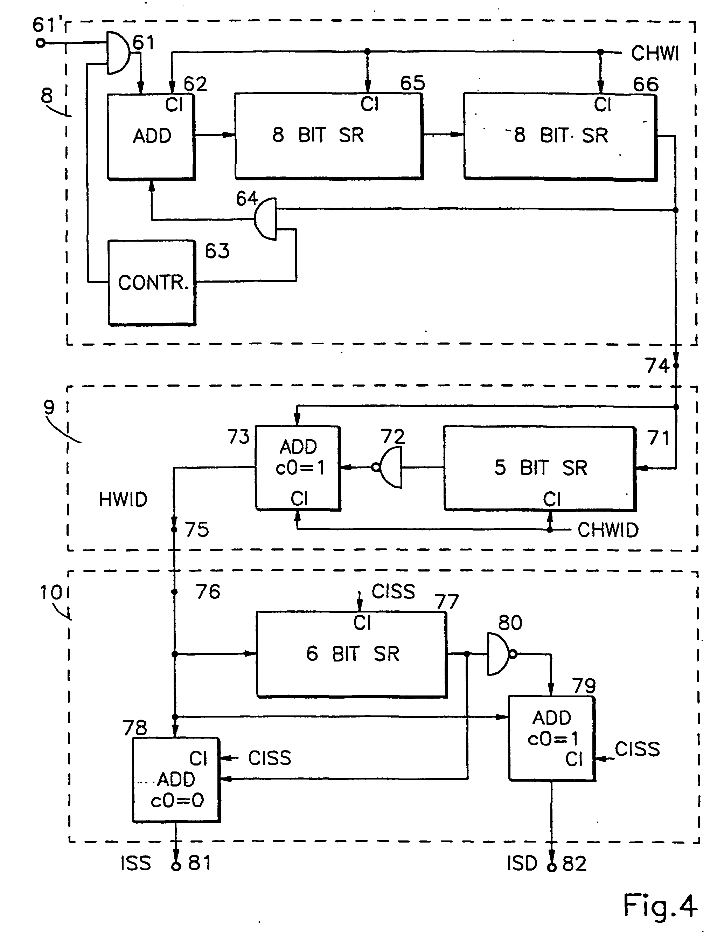

Dazu werden in der Schaltung 8, zu der Einzelheiten in Fig. 4 dargestellt sind, jeweils elf Abtastwerte Y einer Halbwelle des Bittaktsignals zu einem Halbwellenintegral HWI aufsummiert, wobei die fünf geringstwertigen Bits der einzelnen Abtastwerte Y weggelassen werden. Dazu dient eine Und-Schaltung 61, ein Addierer 62, eine weitere Und-Schaltung 64, welche gemeinsam von einer Steuerschaltung 63 gesteuert werden, und zwei 8-Bit-Schieberegister 65, 66. Die Abtastwerte Y werden einem Eingang 61' der Schaltung 8 zugeführt. Die Sinus- und Cosinus-Halbwellenintegrale SHWI und CHWI werden nach folgendem Prinzip gleichzeitig gebildet:

In einer 4,75-kHz-Periode zählt ein Zähler im Frequenzteiler 125 (Fig. 7) die 57-kHz-Perioden, wobei sich der Zählerstand zwischen 0 und 11 bewegt. Zwei 8-Bit-Worte (SHWI und CHWI) rotieren in einem 16-Bit-Schieberegister, das von dem Schieberegister 65, 66 gebildet wird und dessen Eingang die Addition der 5-Bit-Abtastwerte und auch das Löschen der rotierenden Werte (8 Bit) erlaubt. Beim Stand des Zählers im Frequenzteiler 125 (Fig. 7) von sechs erfolgt weder ein Schieben noch eine Addition, so daß diese Phase zur 1,1875-kHz-Phasenvariation benutzt werden kann.

In dem folgenden Diagramm bedeutet rot (r) eine Zirkulation der Daten um acht Bit. Bei den Zählerständen <3 und >8 ist ein Rotieren zwischen den Additionen erforderlich. In der mit s-c bezeichneten Zeile des Diagramms ist angegeben, welche Halbwelle (sinus oder cosinus) jeweils zur Addition verwendet wird. Die Zeile add zeigt mit einem a an, ob eine Addition erfolgt. In den Zeilen sin und cos zeigt ein * an, für welche Komponente die Addition erfolgt, während in der Zeile dump der Zeitpunkt angegeben ist, wann für das jeweilige Halbwellenintegral der entsprechende Wert entnommen wird. Der zugehörige Speicher im Schieberegister wird dann gelöscht.

| | | | | | | | | | | | | | | | | | | | | | |
|---|---|---|---|---|---|---|---|---|---|---|---|---|---|---|---|---|---|---|---|---|---|
| 125 | 11 | | 0 | | 1 | | 2 | | 3 | 4 | 5 | 6 | 7 | 8 | 9 | | 10 | | 11 | | 0 |
| rot | r | r | r | r | r | r | r | r | r | r | r | | r | r | r | r | r | r | r | r | r |
| s-c | c | s | c | s | c | s | c | s | c | s | c | | s | c | s | c | s | c | s | c | s |
| add | a | | a | | a | | a | | a | a | a | | a | a | a | | a | | a | | a |
| cos | * | | * | | * | | * | | * | | * | | | * | | | | | | | |
| sin | | | | | | | | | | * | | | * | | * | | * | | * | | * |
| dump | | | SHWI | | | | | | | | | | | | | | | | | | CHWI |

Von den derart gewonnenen Halbwellenintegralen HWI können die drei geringstwertigen Bits weggelassen werden. Rundungsfehler brauchen hier nicht korrigiert zu werden, da im folgenden nur Differenzen der Halbwellenintegrale HWI benutzt werden.

Zur Realisierung des Frequenzteilers 125 (Fig. 7) ist eine Kette aus einem 1/3- und einem 1/4-Frequenzteiler vorteilhaft, weil dadurch die Erzeugung des Taktes vereinfacht wird. Der 1/3-Teiler teilt bei Bedarf (V1=1) einmal durch zwei oder vier anstatt durch drei.

In der Schaltung 9 (Fig. 1 und Fig. 4) wird die Differenz je zweier aufeinanderfolgender Halbwellen-Integrale HWI im 4,75-kHz-Takt gebildet. Dazu ist ein 5-Bit-Schieberegister 71 vorgesehen, dessen Ausgang über einen Invertierer 72 mit einem Addierer 73 verbunden ist. Das bei 74 zugeführte Signal HWI gelangt einerseits in das Schieberegister 71 und andererseits zum Addierer 73. Ein Ausgang des Addierers bildet den Ausgang 75 der Schaltung 9, an welchem ein Signal HWID(n) = HWI(n) - HWI(n-1) ansteht. Bei Addierern dieser Art, welche die Anzahl der Bits erhöhen, ist sicherzustellen, daß beim letzten Taktimpuls - in diesem Fall beim sechsten - die höchstwertigen Bits beider Eingangssignale am Addierer anstehen. In der Schaltung 9 kann dieses dadurch erreicht werden, daß im Taktsignal CHWID für das Schieberegister 71 der jweils fünfte Impuls unterdrückt wird und so das höchstwertige Bit erst mit dem sechsten Impuls weitergeschoben wird.

In der Schaltung 10 (Fig. 1 und Fig. 4) werden die Summe und die Differenz je zweier aufeinanderfolgender Signalwerte HWID gebildet. Dieses erfolgt im 4,75-kHz-Takt mit einer Genauigkeit von 6 Bit. Einem Eingang 76 wird das Signal HWID zugeführt und gelangt in ein Schieberegister 77, dessen Ausgang mit einem Addierer 78 direkt und mit einem weiteren Addierer 79 über einen Invertierer 80 verbunden ist. Als weiteres Signal wird den Addierern 78, 79 das Signal HWID vom Eingang 76 zugeführt. Ein Ausgang 81 führt das Summensignal ISS und ein Ausgang 82 das Differenzsignal ISD, beide mit einer Bitbreite von 6, da sich bei diesen Additionen die Anzahl der Bits nicht erhöht. Das neu entstehende höchstwertige Bit ist nämlich gleich dem zweithöchsten Bit und kann daher weggelassen werden.

Bei dem Summensignal ISS gilt dieses exakt, da

$$ISS(n) = HWID(n)+HWID(n-1) = HWI(n)-HWI(n-2)$$

und beide HWI-Werte eine Breite von nur 5 Bit aufweisen. Im Falle des Differenzsignals ISD ist ein Überschreiten des 6-Bit-Raumes nur möglich bei starker Amplitudendemodulation (> 1,5 kHz) von Y, was jedoch infolge der vorgesehenen Bandbreiten unwahrscheinlich ist. Außerdem würde ein solcher Einzelfehler im Signal ISD lediglich zu einem einzelnen falschen Wert des Qualitätssignals führen, was tolerierbar ist.

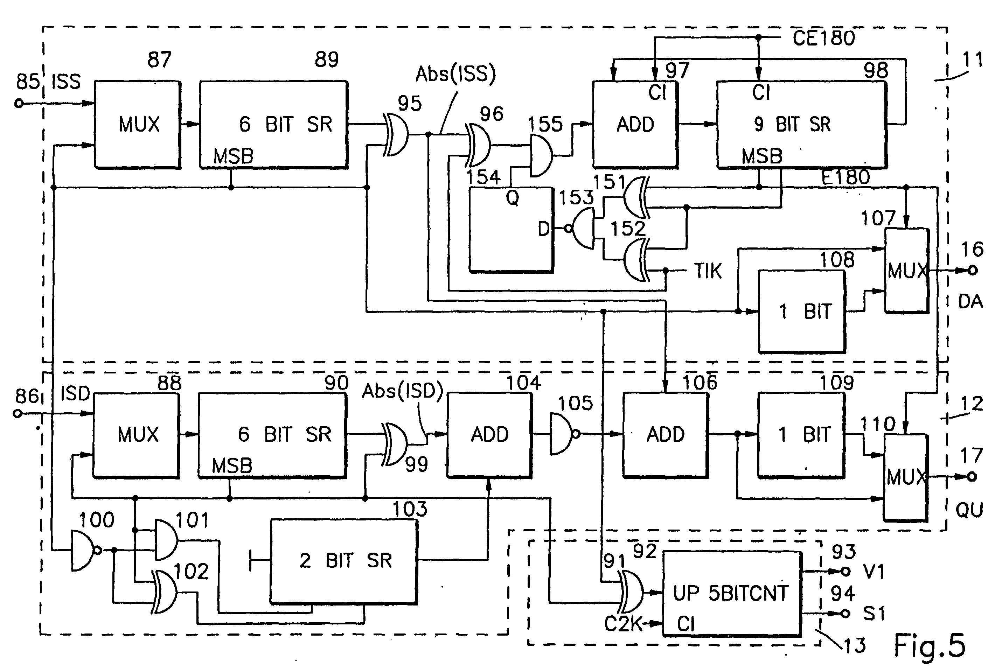

Das Signal ISS wird über den Ausgang 81 der Schaltung 11 (Fig. 5) zur Erkennung des 180°-Fehlers geleitet. Über den Ausgang 82 wird das Differenzsignal ISD der Schaltung 12 (Fig. 5) zur Ableitung eines Qualitätssignals zugeführt. Beide Schaltungen sind in Fig. 5 dargestellt und weisen nach dem Eingang 85, 86 je einen Multiplexer 87, 88 auf, an den sich ein 6-Bit-Schieberegister 89, 90 anschließt. Mit Hilfe dieser Schieberegister wird unter anderem das höchstwertige Bit MSB der Signale ISS und ISD abgetrennt und einer Schaltung 13 zur Phasenregelung des 1,1875 kHz-Taktes zugeleitet.

Die Schaltung 13 (Fig. 5) besteht aus einer Exklusiv-Oder-Schaltung 91, an die sich ein 5-Bit-Aufwärts/Abwärts-Zähler 92 anschließt, der mit einer Frequenz von 2,375 kHz getaktet wird. Im Falle einer 1 am Ausgang der Exklusiv-Oder-Schaltung 91 zählt der Zähler aufwärts, anderenfalls abwärts. Im Falle eines Überlaufs wird die Phase M12 = 6 im Frequenzteiler 125 (Fig. 7) einmal verdoppelt, nach einem Unterlauf wird sie einmal unterdrückt. Beim Einschalten und nach Über- bzw. Unterlauf wird der Inhalt des Zählers 92 auf die Mitte gesetzt. Zum schnelleren Einschwingen der Phase können die Größe oder die Inkremente wie im Falle der Schaltung 7 steuerbar sein. Ausgänge 93, 94 der Schaltung 13 führen Signale V1 und S1, wobei das Signal V1 eine Variation der Phase in einer von S1 gegebenen Richtung bewirkt. Die Ausgänge 93, 94 sind an die Eingänge 126, 127 des Frequenzteilers 125 (Fig. 7) angeschlossen.

Da die mit der Schaltung 13 bewirkte Phasenregelung des 1,1875 kHz-Taktes einen Phasenfehler von 180° gegenüber dem wahren RDS-Bittakt zuläßt, ist eine Entscheidung anhand der im 2,375-kHz-Takt gewonnenen Daten (ISS) erforderlich. Die Summe der Absolutbeträge von ISS ist bei den gültigen Daten größer als bei den dazwischenliegenden falschen Daten.

Daher werden im 2,375-kHz-Takt Absolutwerte des Summensignals ISS mit alternierendem Vorzeichen in einem Akkumulator addiert.

Bei der Erzeugung der Absolutwerte im 2,375-kHz-Takt erfolgt eine Zwischenspeicherung der Daten im Schieberegister 89 (Fig. 5), weil bereits zu Beginn der Additionen das höchstwertige Bit, das das Vorzeichen darstellt, bekannt sein muß. Das Schieberegister 89 wird zunächst mit ISS geladen. Dann wird das höchstwertige Bit MSB über den Multiplexer 87 an den Eingang des Schieberegisters 89 gelegt und die Addition kann beginnen. Die Absolutwerte Abs (ISS) stehen am Ausgang einer Exklusiv-Oder-Schaltung 95 an. Einer weiteren Exklusiv-Oder-Schaltung 96 wird außer den Absolutwerten ein Signal T1K zugeführt, das ein 1,1875-kHz-Rechtecksignal ist und das Alternieren bewirkt. Vor der Addition wird c0 auf MSB XOR T1K gesetzt.

Als Akkumulator dienen ein Addierer 97 und ein 8-Bit-Schieberegister 98. Der Akkumulator ist dadurch mit einer beidseitigen Überlaufsperre versehen, daß für den Akkumulatorinhalt E180 neun statt acht Bit verwendet werden, wobei im obersten Quadranten seines Zählbereiches die Addition und im untersten Quadranten die Subtraktion blockiert wird. Dazu dienen zwei Exklusiv-Oder-Schaltungen 151, 152, eine Nicht-Und-Schaltung 153, ein Flip-Flop 154 und eine Und-Schaltung 155.

Das höchstwertige Bit des Akkumulatorinhalts E180 besagt, welche der im 2,375-kHz-Takt gewonnenen Daten (das höchstwertige Bit von ISS) und der Qualitätssignale gültig sind und steuert dementsprechend einen Multiplexer 107, der das höchstwertige Bit des Signals ISS direkt oder um eine halbe RDS-Taktperiode mit Hilfe eines Flip-Flops 108 verzögert an den Ausgang 16 leitet.

Zur Gewinnung der Qualitätsinformation wird in der Schaltung 12 aus dem bei 86 zugeführten Differenzsignal ISD mit Hilfe des Multiplexers 88 und des Schieberegisters 90 sowie einer Exklusiv-Oder-Schaltung 99 der Absolutwert Abs(ISD) gebildet. Die weiteren Teile der Schaltung 13 realisieren die Funktion MSB(Abs(ISS)-Abs(ISD)-2). Jede der zur Addition gelangenden Größen hat einen Fehler von -1, wenn sie eine ungerade Anzahl von Invertierungen durchlaufen hat, das heißt, -1, wenn ISS negativ (MSB=1) und weitere -1, wenn ISD positiv ist. Statt der obengenannten 2 ist also eine Subtraktion von (1-MSB(ISS)+MSB(ISD)) erforderlich, was mit Hilfe eines Invertierers 100, einer Und-Schaltung 101, einer Exklusiv-Oder-Schaltung 102, einem 2-Bit-Schieberegister 103 und einem Addierer 104 erfolgt. Nach einer Invertierung des Ausgangssignals des Addierers 104 bei 105 wird in einem weiteren Addierer 106 der Absolutwert des Summensignals addiert. Ein Flip-Flop 109 und ein Multiplexer 110 dienen dazu, den 180°-Phasenfehler zu korrigieren. Das Qualitätssignal QU kann dem Ausgang 17 entnommen werden.

Fig. 6 zeigt einige ausgewählte Taktsignale als Spannungszeitdiagramme. In einer 228-kHz-Periode werden außer einem 0-Impuls (CZ) maximal 14 Taktimpulse benötigt, so daß eine Taktfrequenz von 4,332 MHz realisierbar ist. Die Taktsignale CZ, CY und CY8 werden mit einer Frequenz von 228 kHz wiederholt, das Signal CHWI mit einer Frequenz von maximal 114 kHz, die Taktsignale CHWID und CISS mit 4,75 kHz und die Taktsignale CABS und CE180 mit 2,375 kHz.

Fig. 7 zeigt ein Blockschaltbild des Taktsignalgenerators 18. Ein Oszillator 120 erzeugt eine Frequenz von 8,664 MHz, aus der durch einen Teiler 121 228 kHz erzeugt werden. Der Frequenzteiler 121 teilt normalerweise durch 38, was jedoch durch Signale V57 und S57 an Eingängen 122 und 123 um $\pm 1$ variiert werden kann.

Die Frequenz von 228 kHz wird in einem weiteren Frequenzteiler 124 durch vier geteilt, wodurch die Hilfsträgerfrequenz von 57 kHz entsteht. Daran schließt sich ein Frequenzteiler 125 an, dessen Teilerverhältnis über Eingänge 126, 127 mit Hilfe von Signalen V1 und S1 vom Normalwert 12 ausgehend um eins erhöht bzw. erniedrigt werden kann.

Drei weitere Frequenzteiler 128 bis 130 erzeugen aus der Ausgangsfrequenz von 4,75 kHz des Frequenzteilers 125 Frequenzen von 2,375 kHz, 1,1875 kHz und ca. 0,6 kHz. Ausgangssignale der Frequenzteiler 121, 124, 125 und 128 werden einer Logikschaltung 131 zugeführt, an deren Ausgängen die einzelnen Taktsignale entnehmbar sind. Außerdem dienen die durch ihre Frequenzen in Fig. 7 bezeichneten Signale ebenfalls als Taktsignale.

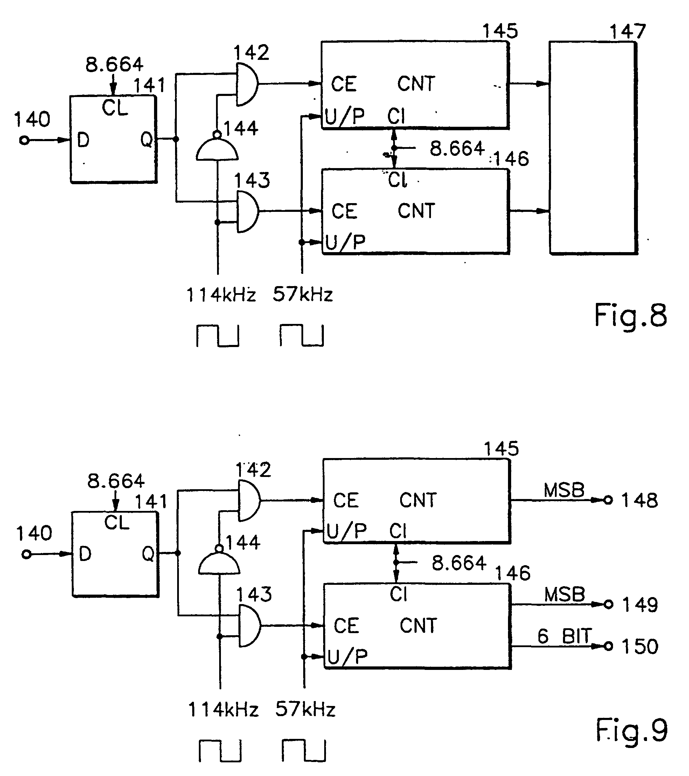

Bei dem in Fig. 8 dargestellten Ausführungsbeispiel wird das aus dem Multiplexsignal herausgefilterte und amplitudenbegrenzte hilfsträgerfrequente Radio-Daten-Signal einem Eingang 140 zugeleitet und mit Hilfe eines Flip-Flops 141 im Takt von 8,664 MHz abgetastet. Zwei Und-Schaltungen 142, 143 werden mit einem zugeführten mäanderförmigen 114-kHz-Signal angesteuert, wobei mit Hilfe eines Invertierers 144 die Und-Schaltung 142 entgegengesetzt zur Und-Schaltung 143 gesteuert wird.

Die Ausgänge der Und-Schaltungen 142, 143 sind mit "Count-enable"-Eingängen zweier Aufwärts/Abwärts-Zähler 145, 146 verbunden, so daß diese abwechselnd die Einsen (oder die Nullen) des Eingangssignals zählen. Den Zählern wird eine Taktfrequenz von 8,664 MHz zugeleitet. Außerdem werden die Zähler 145, 146 bezüglich ihrer Zählrichtung von einem zugeführten mäanderförmigen 57-kHz-Signal gesteuert. Ausgänge der Zähler sind mit Eingängen eines Mikroprozessors 147 verbunden.

Die Zähler 145, 146 erhalten abwechselnd je 38 Taktimpulse des 8,664-MHz-Taktsignals synchron zu dem 57-kHz-Raster. In den inaktiven Phasen, während der jeweils andere Zähler zählt, werden die Zähler im 57-kHz-Takt ausgewertet und neu gesetzt.

Insgesamt ergibt sich folgende zeitliche Abfolge, wobei n eine Ordnungszahl für eine 114-kHz-Taktperiode bedeutet:

| | | |
|---|---|---|
| n-1 | Zähler 146 zählt abwärts, | Zähler 145 auf 0 gesetzt |
| n-2 | Zähler 145 zählt abwärts | |
| n-1 | Zähler 146 zählt aufwärts | |
| n | Zähler 145 zählt aufwärts, | Zähler 146 Inhalt retten |
| | | Zähler 146 auf 0 setzen |

(fortgesetzt)

| n-3 | s.o. | Datenausgabe (Interrupt) |
|---|---|---|

Auf diese Weise werden keine Addierwerke zur Differenzbildung benötigt.

Fig. 9 zeigt eine der Schaltungsanordnung nach Fig. 8 ähnliche Schaltungsanordnung, wobei die mit gleichen Bezugszeichen versehenen Bauteile die gleiche Funktion ausüben. Die Schaltungsanordnung nach Fig. 9 ist jedoch in erster Linie nicht für einen Mikroprozessor vorgesehen, sondern kann beispielsweise anstelle der Schaltungen 4 und 5 bei einem Demodulator nach Fig. 1 verwendet werden. Dem Eingang 140 wird dann das Ausgangssignal des Begrenzers 3 (Fig. 1) zugeführt, während von Ausgängen 148, 149 (Fig. 9) jeweils das höchstwertige Bit der im 57-kHz-Takt aus den Zählern 145, 146 ausgelesenen Signalen den Schaltungen 6 und 7 (Fig. 1) zugeführt wird. Ein aus dem Zähler 146 ausgelesener Wert der Breite von 6 Bit wird vom Ausgang 150 der Schaltung 8 (Fig. 1) zugeleitet.

Die Funktion des digitalen Bandpasses 5 wird bei der Schaltung nach Fig. 9 dadurch übernommen, daß die Zähler 145, 146 je nach dem Auslesen ihres Inhalts auf die Hälfte dieses Inhalts gesetzt werden. Dieses kann in einfacher Weise durch eine Shift-Funktion erfolgen, die bei Zählerbausteinen häufig vorgesehen, jedoch in Fig. 9 im einzelnen nicht dargestellt ist. Die Shift-Funktion ist mindestens im RDS-Kanal ohnehin zum seriellen Auslesen erforderlich.

**Patentansprüche**

1. Demodulationsverfahren für Radio-Daten-Signale, deren Übertragung durch Phasenumtastung eines unterdrückten Hilfsträgers erfolgt, wobei ein das hilfsträgerfrequente Signal enthaltendes Multiplexsignal über einen Bandpass und einen Amplitudenbegrenzer geleitet wird, **dadurch gekennzeichnet, dass** das amplitudenbegrenzte trägerfrequente Signal mit einer Abtastfrequenz abgetastet wird, die ein Vielfaches der Frequenz des Hilfsträgers ist, dass die Abtastwerte über einen vorgegebenen Teil jeweils einer Periode des Hilfsträgers aufsummiert werden und die aufsummierten Abtastwerte einer digitalen Signalverarbeitungsschaltung zugeführt werden.

2. Demodulator für Radio-Daten-Signale mit Mitteln zur Durchführung der Schnitte des Verfahrens nach Anspruch 1.

3. Demodulator nach Anspruch 2, **dadurch gekennzeichnet, daß** die digitale Signalverarbeitungsschaltung (5 bis 13) eingangsseitig einen digitalen Bandpaß (5) mit einer Mittenfrequenz aufweist, welche der Frequenz des Hilfsträgers entspricht.

4. Demodulator nach einem der vorhergehenden Ansprüche 2 bis 4, **dadurch gekennzeichnet, daß** der vorgegebene Teil ein Viertel ist.

5. Demodulator nach Anspruch 3, **dadurch gekennzeichnet, daß** die digitale Signalverarbeitungsschaltung (5 bis 13) ferner eine Schaltung (8) zur Integration des Ausgangssignals des digitalen Bandpasses über jeweils eine Halbwelle des Bittaktsignals, Schaltungen (9, 10) zur Berechnung der Differenzen zweier aufeinanderfolgender Integrale und der Summe der Differenzen enthält und daß aus der Summe der Differenzen das demodulierte Ausgangssignal und ein Schaltphasenkorrektursignal erzeugt werden.

6. Demodulator nach Anspruch 5, **dadurch gekennzeichnet, daß** ferner aus den Differenzen zweier aufeinanderfolgender Integrale eine Differenz gebildet wird und daß aus der Differenz der Differenzen ein Qualitätssignal gebildet wird.

7. Demodulator nach Anspruch 5, **dadurch gekennzeichnet, daß** der digitale Bandpaß (5) zwei orthogonale Ausgangssignale erzeugt, deren höchstwertige Bits einer Schaltung (6) zur Erkennung des Vorhandenseins von Verkehrsfunksignalen und einer Phasenregelschaltung zur Erzeugung eines regenerierten Hilfsträgers zuführbar sind.

8. Demodulator nach Anspruch 6, **dadurch gekennzeichnet, daß** aus den höchstwertigen Bits der Summe der Differenzen und der Differenz der Differenzen Signale zur Regelung der Phase eines regenerierten Radio-Daten-Takt-Signals erzeugt werden.

9. Demodulator nach Anspruch 2, **dadurch gekennzeichnet, daß** zum Aufsummieren der Abtastwerte zwei Aufwärts/Abwärts-Zähler (145, 146) vorgesehen sind, die mit dem Vielfachen der Frequenz des Hilfsträgers getaktet werden, wobei die Abtastwerte jeweils für die Dauer einer viertel Periode des Hilfsträgers abwechselnd einem Steuereingang (Count-enable) eines der Aufwärts/Abwärts-Zähler (145, 146) zuführbar sind und daß die Aufwärts/ Abwärts-Zähler (145, 146) für jeweils eine halbe Periode des Hilfsträgers aufwärts und für eine weitere halbe Periode des Hilfsträgers abwärts zählen und daß jeweils am Ende einer Periode der Zählerstand beider Zähler in eine Schaltung zur Signalverarbeitung übertragen wird.

10. Demodulator nach Anspruch 9, **dadurch gekennzeichnet, daß** die Schaltung zur Signalverarbeitung ein Mikroprozessor (148) ist, in welchem ein Programm zur weiteren Auswertung der zugeführten Signale ausführbar ist.

11. Demodulator nach einem der Ansprüche 9 oder 10, **dadurch gekennzeichnet, daß** nach dem Übertragen des Zählerstandes der jeweilige Aufwärts/Abwärts-Zähler (145, 146) auf einen vorgegebenen Bruchteil, vorzugsweise die Hälfte des übertragenen Zählerstandes, gesetzt wird.

**Claims**

1. Demodulation method for radio data signals which are transmitted by phase shift keying a suppressed auxiliary carrier, where a multiplex signal containing the signal at the auxiliary carrier's frequency is routed via a bandpass filter and an amplitude limiter, **characterized in that** the amplitude-limited carrier-frequency signal is sampled at a sampling frequency which is a multiple of the frequency of the auxiliary carrier, **in that** the samples are summed over a prescribed portion of one respective period of the auxiliary carrier, and the summed samples are supplied to a digital signal processing circuit.

2. Demodulator for radio data signals, having means for carrying out the steps of the method according to Claim 1.

3. Demodulator according to Claim 2, **characterized in that** the digital signal processing circuit (5 to 13) has, on its input side, a digital bandpass filter (5) having a centre frequency which corresponds to the frequency of the auxiliary carrier.

4. Demodulator according to one of the preceding Claims 2 to 4, **characterized in that** the prescribed portion is one quarter.

5. Demodulator according to Claim 3, **characterized in that** the digital signal processing circuit (5 to 13) also contains a circuit (8) for integrating the output signal from the digital bandpass filter over one respective half-wave of the bit clock signal, circuits (9, 10) for calculating the differences between two successive integrals and the sum of the differences, and **in that** the demodulated output signal and a switching-phase correction signal are generated from the sum of the differences.

6. Demodulator according to Claim 5, **characterized in that** a difference is also formed from the differences between two successive integrals, and **in that** a quality signal is formed from the difference between the differences.

7. Demodulator according to Claim 5, **characterized in that** the digital bandpass filter (5) generates two orthogonal output signals whose most significant bits can be supplied to a circuit (6) for recognizing the presence of traffic radio signals and to a phase control circuit for generating a regenerated auxiliary carrier.

8. Demodulator according to Claim 6, **characterized in that** signals for controlling the phase of a regenerated radio data clock signal are generated from the most significant bits of the sum of the differences and the difference between the differences.

9. Demodulator according to Claim 2, **characterized in that**, for the purpose of summing the samples, two up/down counters (145, 146) are provided which are clocked with the multiple of the frequency of the auxiliary carrier, the samples respectively being able to be supplied alternately to a control input (count enable) on one of the up/down counters (145, 146) for the duration of a quarter-period of the auxiliary carrier, and **in that** the up/down counters (145, 146) count upwards for a respective half-period of the auxiliary carrier and count downwards for a further half-period of the auxiliary carrier, and **in that** the count on the two counters is respectively transferred to a circuit for signal processing at the end of a period.

10. Demodulator according to Claim 9, **characterized in that** the circuit for signal processing is a microprocessor (148) in which a program for further evaluation of the supplied signal can be executed.

**11.** Demodulator according to either of Claims 9 and 10, **characterized in that** transfer of the count is followed by the respective up/down counter (145, 146) being set to a prescribed fraction, preferably half, of the transferred count.

**Revendications**

**1.** Procédé de démodulation pour signaux « RDS » dont la transmission s'effectue par modulation par manipulation de déphasage d'une sous-porteuse supprimée, un signal multiplexé contenant le signal de fréquence de la sous-porteuse étant conduite au travers d'un filtre passe-bande et d'un limiteur d'amplitude,

**caractérisé en ce que**

le signal de fréquence de porteuse limité en amplitude est échantillonné à une fréquence d'échantillonnage qui est un multiple de la fréquence de la sous-porteuse, les valeurs d'échantillonnage sont additionnées pendant une partie prescrite de chaque fois une période de la sous porteuse et les valeurs d'échantillonnage additionnées sont dirigées vers un circuit de traitement de signaux numériques.

**2.** Démodulateur pour signaux « RDS » comportant des moyens pour l'exécution des étapes du procédé selon la revendication 1.

**3.** Démodulateur selon la revendication 2,

**caractérisé en ce que**

le circuit de traitement de signaux numériques 5 à 13 présente, côté entrée, un filtre passe-bande numérique (5) avec une fréquence médiane qui correspond à la fréquence de la sous-porteuse.

**4.** Démodulateur selon l'une quelconque des revendications précédentes 2 à 3,

**caractérisé en ce que**

la partie prescrite est un quart.

**5.** Démodulateur selon la revendication 3,

**caractérisé en ce que**

le circuit de traitement de signaux numériques (5 à 13) contient en outre un circuit (8) pour l'intégration du signal de sortie du filtre passe bande numérique, sur, chaque fois, une demi-onde du signal d'horloge binaire, des circuits (9, 10) pour calculer la différence entre deux intégrales se succédant l'une l'autre et l'addition des différences et, à partir de l'addition des différences, le signal de sortie démodulé et un signal de correction de phases de commutation sont générés.

**6.** Démodulateur selon la revendication 5,

**caractérisé en ce qu'**

en outre, une différence est formée, à partir des différences de deux intégrales se succédant l'une l'autre, et à partir de la différence des différences on forme un signal de qualité.

**7.** Démodulateur selon la revendication 5,

**caractérisé en ce que**

le filtre passe-bande numérique (5) génère deux signaux de sortie orthogonaux dont les bits de poids fort peuvent être dirigés vers un circuit (6) pour la détection de la présence de signaux radio de circulation et vers un circuit de régulation de phase pour créer une sous-porteuse régénérée.

**8.** Démodulateur selon la revendication 6,

**caractérisé en ce que**

à partir des bits de poids fort de la comme des différences et de la différence des différences, sont générés des signaux de régulation de la phase d'un signal d'horloge de données radio régénéré.

**9.** Démodulateur selon la revendication 2,

**caractérisé en ce que**

pour effectuer l'addition des valeurs d'échantillonnage, deux compteurs/décompteurs (145, 146) sont prévus dont la fréquence est un multiple de la fréquence de la sous-porteuse, les valeurs d'échantillonnage pouvant être dirigées chaque fois pendant un quart de période de la fréquence auxiliaire, alternativement d'une entrée de contrôle (count enable) de l'un des compteurs/décompteurs (145, 146) et, les compteurs/décompteurs (145, 146) comptent pendant chaque fois une demi-période de la fréquence de la sous-porteuse et décomptent pendant une autre demi-période de la sous porteuse, et chaque fois à la fin d'une période, l'état de comptage des deux compteurs est transmis à un circuit de traitement de signaux pour traitement du signal.

10. Démodulateur selon la revendication 9,
    **caractérisé en ce que**
    le circuit pour le traitement du signal est un microprocesseur (148) dans lequel peut s'exécuter un programme d'exploitation supplémentaire des signaux reçus.

11. Démodulateur selon l'une des revendications 9 ou 10,
    **caractérisé en ce que**
    après la transmission de l'état du comptage, le compteur/décompteur (145, 146) concerné est initialisé à une fraction prescrite de l'état de comptage transmis, de préférence la moitié.

Fig.1

Fig.2

Fig.3

Fig.4

Fig.5

CZ

CY

CY8

CHWI

CHWID

CISS

CABS

CE180

Fig.6

← 1/228kHz →

OSZ
8.664
MHz ──120

121 :(38(+/−1))

V57 ──122

S57 ──123

124 :4

V1 ──126
S1 ──127

125 :(12(+/−1))

128 :2

129 :2

130 :2

131 LOGIC

8,664
228

CY
CY8
CZ

CHWI
ADD
DUMP
CHWID
CISS
CABS
CE180

57
4,75
1,1875
0,6

Fig.7

Fig.8

Fig.9